Europäisches Patentamt

European Patent Office

Office européen des brevets

(11) Veröffentlichungsnummer: **0 291 649**
**A2**

# EUROPÄISCHE PATENTANMELDUNG

(21) Anmeldenummer: 88103570.3

(22) Anmeldetag: 08.03.88

(51) Int. Cl.⁴ **F15B 13/044**

(30) Priorität: 19.05.87 DE 3716702

(43) Veröffentlichungstag der Anmeldung:
23.11.88 Patentblatt 88/47

(84) Benannte Vertragsstaaten:
**DE FR GB IT**

(71) Anmelder: **Dr.Ing.h.c. F. Porsche
Aktiengesellschaft
Porschestrasse 42
D-7000 Stuttgart 40(DE)**

(72) Erfinder: **Szodfridt, Imre, Dr. Dipl.-Ing.
Hohentwielstrasse 70
D-7000 Stuttgart(DE)**

(54) **Elektromagnetisch betätigtes Hydroventil.**

(57) Um ein elektromagnetisch betätigtes Hydroventil möglichst klein bauen zu können bzw. mit ihm große Durchflüsse steuern zu können, ist an dem Anker ein Druckausgleich realisiert. Durch eine besondere Anordnung des Pumpenanschlusses, des Arbeitsanschlusses und des Rücklaufanschlusses zu dem zwischen zwei Sitzringen beweglichen Ventilkörper wird der Pumpendruck auf den mit dem Anker verbundenen Ventilkörper und zugleich auf eine Gegenfläche des Ankers übertragen, die als federnde Membran ausgebildet ist.

FIG 1

EP 0 291 649 A2

## Elektromagnetisch betätigtes Hydroventil

Die Erfindung betrifft ein elektromagnetisch betätigtes Hydroventil nach dem Oberbegriff des Anspruchs 1.

Ein derartiges direkt betätigtes Hydroventil ist aus DE-OS 34 29 216 bekannt. Um mit einem kleinen Elektromagneten, der nur einen geringen Bauraum erfordert, auszukommen, ist dort eine Hebelübersetzung zwischen dem Anker des Elektromagnets und dem die Hydraulikanschlüsse steuernden Ventilschieber vorgesehen. Da somit einem kleinen Schaltweg des Ankers ein größerer Schaltweg des Ventilschiebers entspricht, können mit kleinem Hub des Ankers verhältnismäßig große Querschnitte der Hydraulikanschlüsse und entsprechende Durchsatzmengen an Hydraulikflüssigkeit gesteuert werden.

Es ist die Aufgabe der Erfindung, ein solches Hydroventil so weiterzubilden, daß der Elektromagnet und das Ventilgehäuse bei gleichem zu steuerndem Durchfluß an den Hydraulikanschlüssen weiter verkleinert werden können.

Zur Lösung dieser Aufgabe dienen die kennzeichnenden Merkmale des Anspruchs 1. Wenn der Ventilkörper zwischen zwei Ventilsitzen hin- und herbeweglich ist und durch deren wechselweises Verschließen einen Arbeitsanschluß entweder mit dem Pumpenanschluß oder mit dem Rücklaufanschluß in Hydroverbindung bringt, ist es in vorteilhafter Ausgestaltung der Erfindung möglich, den Pumpendruck auf den Ventilkörper und zugleich auf eine Gegenfläche des Ankers zu geben und somit die am Anker wirkenden Druckkräfte annähernd auszugleichen. Der zur Betätigung des Ankers erforderliche Elektromagnet kann daher wesentlich verkleinert werden bzw. mit gleich großem Elektromagnet können größere Durchsatzmengen gesteuert werden. Weitere konstruktive Merkmale des erfindungsgemäßen Hydroventils enthalten die Unteransprüche.

Mehrere Ausführungsbeispiele der Erfindung sind in der Zeichnung dargestellt und werden nachfolgend erläutert.

Es zeigen:

Fig. 1 Längsschnitt des Hydroventils

Fig. 2 Hydroventil ähnlich Fig. 1, jedoch mit vertauschten Hydroanschlüssen,

Fig. 3 Längsschnitt durch eine abgewandelte Ausführung eines Hydroventils,

Fig. 4 Hydroventil ähnlich Fig. 3, jedoch mit vertauschten Hydroanschlüssen,

Fig. 5 Querschnitt nach Linie V-V der Fig. 1.

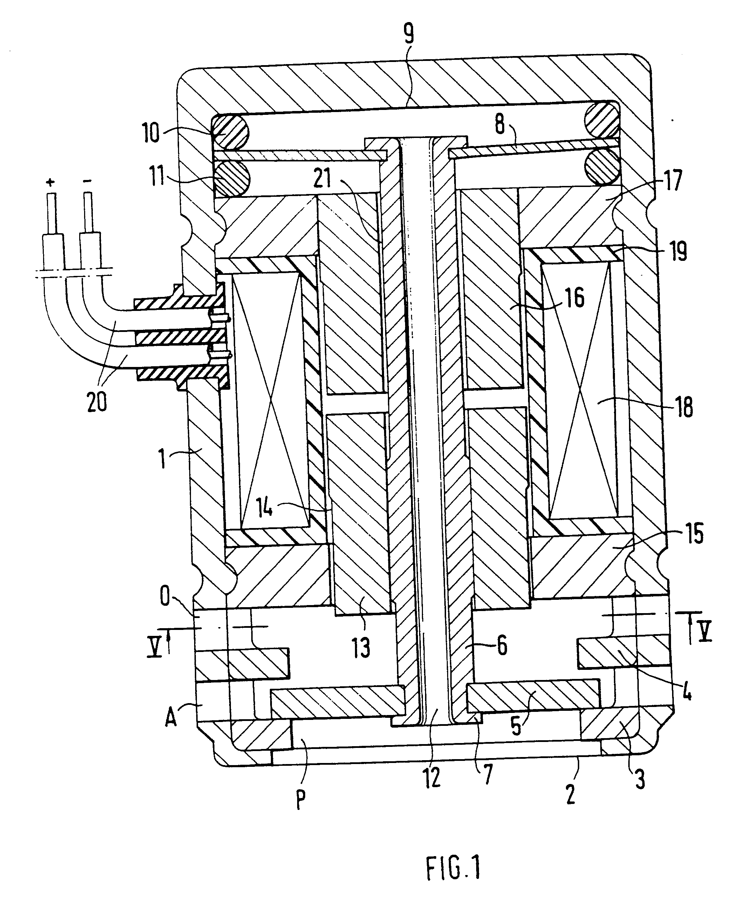

Ein elektromagnetisch betätigtes Hydroventil, das in Fig. 1 etwa 5-fach vergrößert dargestellt ist, ist von einem zylindrischen, tropfförmigen Ventilgehäuse 1 umschlossen. Angrenzend an die offene Stirnfläche 2 des Ventilgehäuses 1 sind die Sitzringe 3 und 4 im Ventilgehäuse 1 eingepreßt. Zwischen den Sitzringen 3 und 4 ist am Umfang des Ventilgehäuses 1 ein Arbeitsanschluß A angeordnet, der mit einem hydraulisch zu betätigenden Arbeitskolben verbunden ist. Oberhalb des Sitzringes 4 liegt am Umfang des Ventilgehäuses 1 ein Rücklaufanschluß O zu einem drucklosen Vorratsbehälter. Zur Stirnfläche 2 des Ventilgehäuses 1 führt ein Pumpenanschluß P; er wird von einer Pumpe mit Hydraulikflüssigkeit versorgt. Zwischen den Sitzringen 3 und 4 ist ein scheibenförmiger Ventilkörper 5 angeordnet, der zwischen den beiden Sitzringen 3 und 4 hin- und herbeweglich ist. Wenn er sich an den Sitzring 4 anlegt, ist der Pumpenanschluß P mit dem Arbeitsanschluß A verbunden, legt er sich an den Sitzring 3 an, so steht der Rücklaufanschluß O mit dem Arbeitsanschluß A in Verbindung. Der Ventilkörper 5 ist an einem Ende einer Ankerstange 6 mit einem Bördelring 7 befestigt; auf die gleiche Art ist mit dem anderen Ende der Ankerstange 6 eine Membran 8 verbunden, die zwischen einem am Boden 9 des Ventilgehäuses 1 anliegenden O-Ring 10 und einem gehäusefesten Distanzring 11 eingespannt ist. Die Ankerstange 16 ist mit einer zentralen Bohrung 12 versehen und zentrisch in einem Magnetkern 13 befestigt, der mit Radialspalt 14 in einem in das Ventilgehäuse 1 eingerollten Führungsring 15 geführt ist. Auf Abstand zum beweglichen Magnetkern 13 ist zu ihm koaxial ein feststehender Magnetkern 16 in einen ebenfalls in das Ventilgehäuse eingerollten Haltering 17 eingepreßt; in ihm ist die Ankerstange 6 mit Radialspalt 21 geführt. Zwischen dem Führungs ring 15 und dem Haltering sitzt im Ventilgehäuse ein eine elektrische Wicklung 18 enthaltendes, im Querschnitt U-förmiges Magnetgehäuse 19, wobei die elektrische Wicklung über die gehäusefesten Anschlußkabel 20 mit Strom versorgt wird. Der Pumpendruck wirkt stirnseitig auf den Ventilkörper 5 und zugleich über die zentrale Bohrung 12 der Ankerstange 6 von der anderen Seite her auf die als Gegenfläche 8 wirkende Membran 8, so daß an dem aus Ankerstange und beweglichem Magnetkern bestehenden Anker Druckausgleich herrscht. In der gezeichneten Ausgangslage wird der Ventilkörper 5 durch die Membran 8 an den Sitzring 3 federnd angelegt. Bei Stromzufuhr wird der bewegliche Magnetkern 13 weiter in das Magnetgehäuse 19 hineingezogen, bis der Ventilkörper 5 am Sitzring 4 anliegt und der Pumpenanschluß P mit dem Arbeitsanschluß A in Verbindung steht. Wird der Strom ausgeschaltet, so geht der Anker mit dem Ventilkörper in die gezeichnete Ausgangslage durch Federkraft zurück. Da am Anker Druckausgleich herrscht, sind zum Schalten nur sehr geringe Magnetkräfte notwendig und es können mit einem verhältnismäßig kleinem Elektromagnet große Durchsatzmengen an den Ventilsitzringen 3, 4 gesteuert werden.

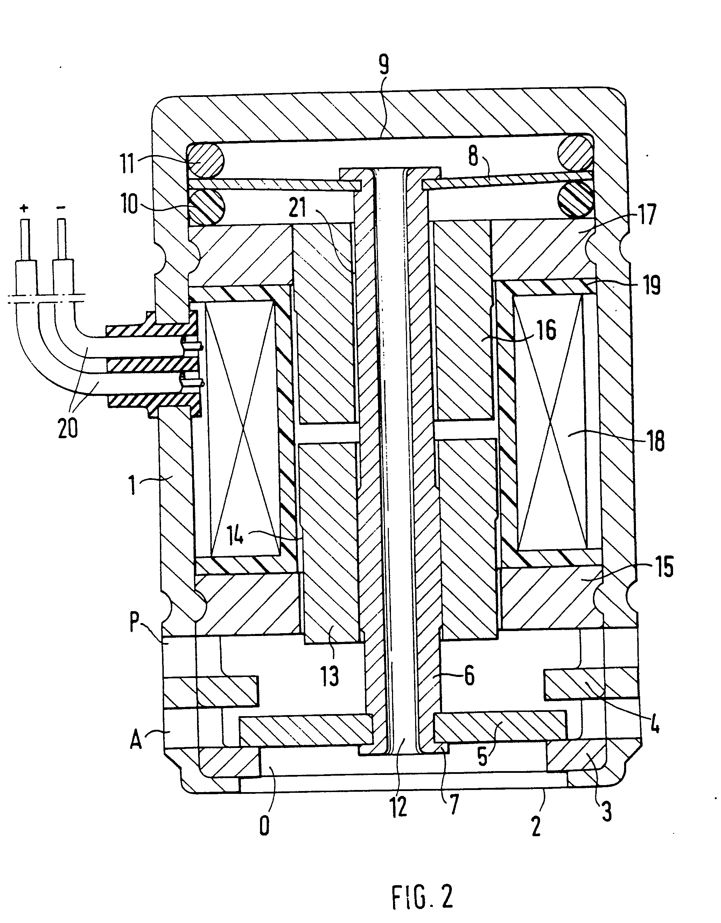

In Abweichung zu Fig. 1 sind in Fig. 2 die Hydroanschlüsse vertauscht. Der Pumpenanschluß P liegt am Umfang, der Rücklaufanschluß O an der Stirnfläche 2 des Ventilgehäuses 1. Der Distanzring 11 liegt oberhalb, der O-Ring 10 unterhalb der Membran 8. In der gezeichneten Ausgangslage, die für eine nicht erregte elektrische Wicklung gilt, steht der Pumpenaschluß P in Hydroverbindung mit dem Arbeitsanschluß A. Der mit diesem Hydroventil zu betätigende Arbeitskolben steht bei nicht geschaltetem Hydroventil unter Pumpendruck. Diese Verbindung wird erst durch Stromzufuhr und Betätigen des Ventilkörpers 5 unterbrochen.

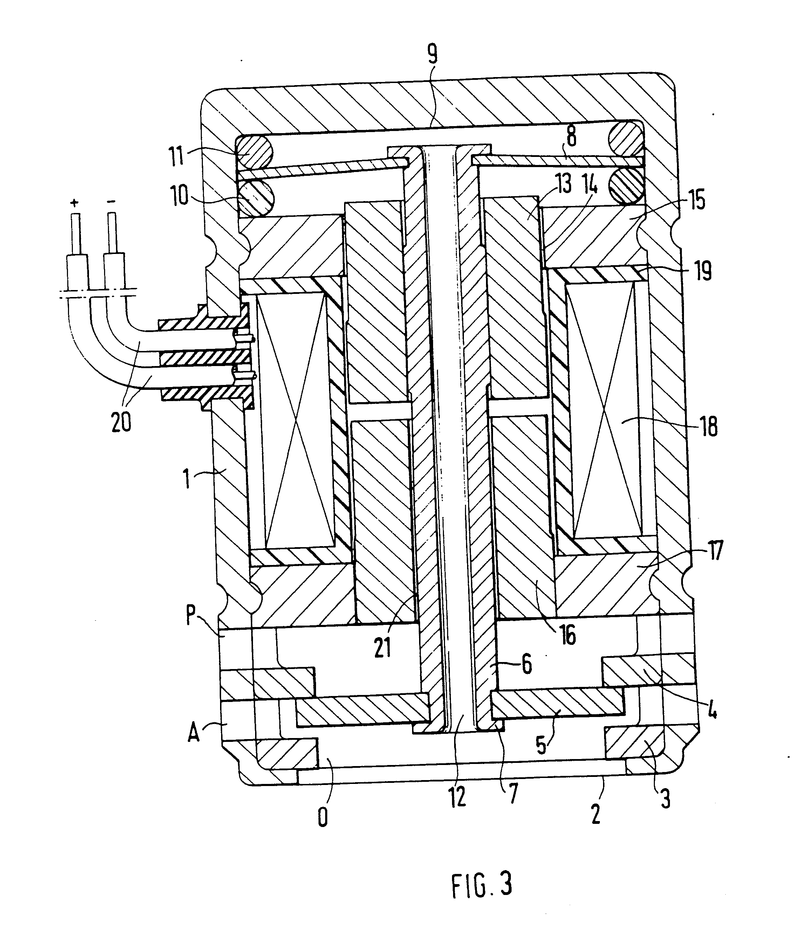

Eine abgewandelte Bauart eines Hydroventils zeigt Fig. 3, bei der dieselben Bauteile verwendet, aber etwas anders angeordnet sind. Der Haltering 17 mit dem feststehenden Magnetkern 16 ist benachbart zu dem Sitzring 4 angeordnet. Der bewegliche Magnetkern 13 liegt unmittelbar unterhalb der Membran 8. Bei dieser Ausführungsform des Hydroventils wird bei Erregen der elektrischen Wicklung der bewegliche Magnetkern 13 nach unten in die Spule hineingezogen und hebt den Ventilkörper 5 vom Sitzring 4 ab, so daß eine Verbindung geschaffen wird vom Pumpenanschluß P zum Arbeits anschluß A. Ein Druckausgleich wird dadurch geschaffen, daß der Pumpendruck über den Radialspalt 21 zwischen dem feststehenden Magnetkern 16 und der Ankerstange 6 sowie den Radialspalt 14 zwischen dem beweglichen Magnetkern 13 und dem Führungsring 15 auf die Membran 8 übertragen wird.

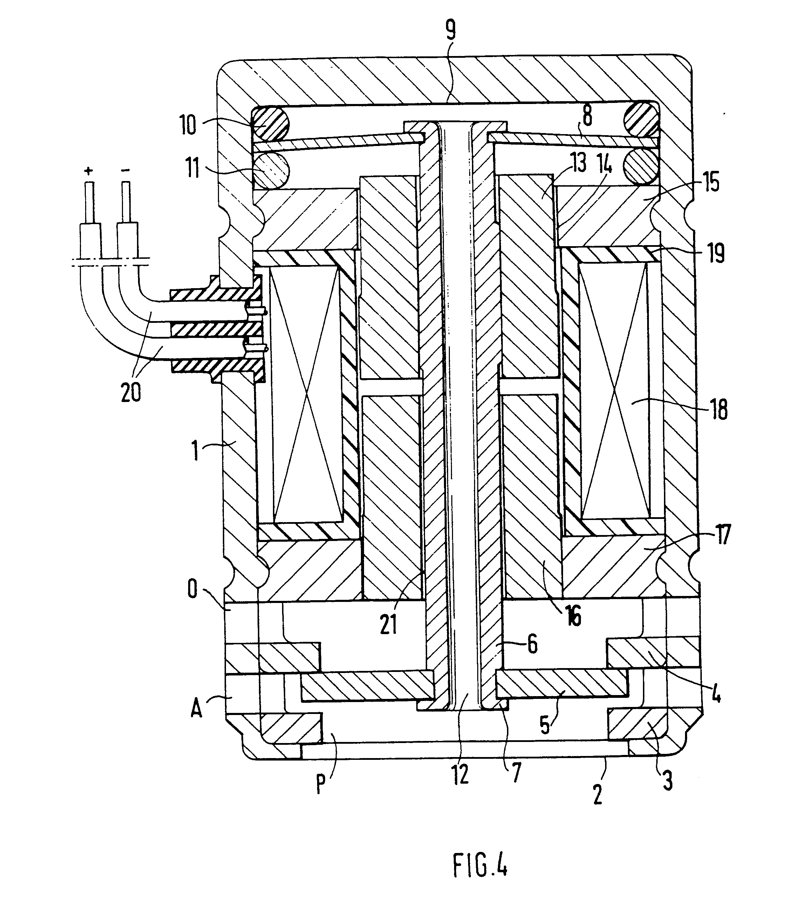

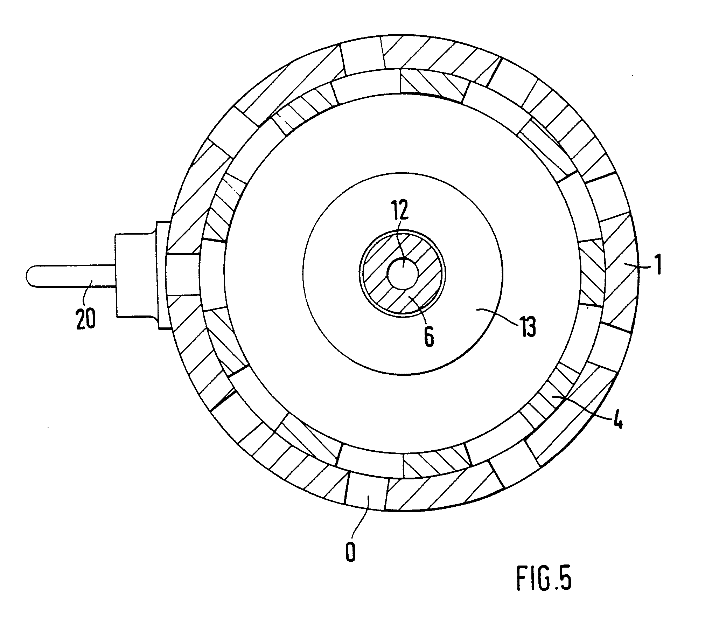

In Abwandlung hierzu sind bei Fig. 4 die Hydroanschlüsse vertauscht. Der stirnseitig am Ventilgehäuse angeordnete Pumpenanschluß P steht bei nicht erregter elektrischer Wicklung mit dem Arbeitsanschluß A in Verbindung. Ein Druckausgleich findet statt durch die zentrale Bohrung 12 der Ankerstange hindurch. Wie Fig. 5 zeigt, sind die Hydroanschlüsse als symmetrisch am Umfang des Ventilgehäuses 1 verteilte radiale Durchbrüche gestaltet.

Ein Hydroventil, wie es in Fig. 1 bis Fig. 5 dargestellt ist, dient als Schaltventil. Nach demselben Prinzip kann ein Regelventil konstruiert sein. Es enthält einen Pumpenanschluß, einen Rücklaufanschluß zum Vorratsbehälter und einen zwischen den beiden Anschlüssen gelegenen Anschluß für den geregelten Druck. Im Unterschied zum Schaltventil besteht der Ventilkörper aus zwei Ventiltellern, die durch eine zwischen ihnen liegende Schraubenfeder gegen die beiden Ventilsitze federnd angelegt sind.

## Ansprüche

1. Elektromagnetisch betätigtes Hydroventil, mit einem in einem Magnetgehäuse durch Erregen einer elektrischen Wicklung entgegen Federkraft in Längsrichtung schaltbaren, zentralen Anker, bei dessen Längsverschieben ein an ihm koaxial befestigter Ventilkörper drei Hydraulikanschlüsse steuert, die am Ventilgehäuse angeordnet sind, wobei der eine Hydraulikanschluß einen Pumpenanschluß, der andere einen Arbeitsanschluß zu einem Arbeitszylinder und der dritte einen Rücklaufanschluß zu einem drucklosen Vorratsbehälter darstellt, dadurch gekennzeichnet, daß der Ventilkörper (5) zwischen zwei Sitzringen (3 und 4) hin- und herbeweglich ist und durch deren wechselweises Verschließen den Arbeitsanschluß (A) entweder mit dem Pumpenanschluß (P) oder mit dem Rücklaufanschluß (O) in Hydroverbindung bringt.

2. Hydroventil nach Anspruch 1, dadurch gekennzeichnet, daß mit dem am Pumpenanschluß (P) zugeführten Pumpendruck der Ventilkörper (5) und zugleich eine Gegenfläche (8) des Ankers (6, 13) so beaufschlagt sind, daß die am Anker (6, 13) wirkenden Druckkräfte annähernd ausgeglichen sind.

3. Hydroventil nach Anspruch 2, dadurch gekennzeichnet, daß der Pumpendruck auf den Ventilkörper (5) unmittelbar, auf die Gegenfläche (8) über Radialspalte (14, 21) am Anker (6, 13) einwirkt.

4. Hydroventil nach Anspruch 2, dadurch gekennzeichnet, daß der Pumpendruck über eine zentrale, durch den Ventilkörper (5) und/oder den Anker (6, 13) durchgehende Bohrung (12) auf die Gegenfläche (8) übertragen wird.

5. Hydroventil nach einem der Ansprüche 1 bis 4, dadurch gekennzeichnet, daß der Ventilkörper (5) als ebene Scheibe ausgebildet ist.

6. Hydroventil nach einem der Ansprüche 1 bis 4, dadurch gekennzeichnet, daß oberhalb des einen Sitzringes (4) der Pumpenanschluß (P), unterhalb des anderen Sitzringes (3) der Rücklaufanschluß (O) und zwischen den beiden Ventilsitzen (3 und 4) der Arbeitsanschluß (A) liegt.

7. Hydroventil nach Anspruch 6, dadurch gekennzeichnet, daß der Pumpenanschluß (P) am Umfang, der Rücklaufanschluß (O) an einer Stirnfläche (2) des Ventilgehäuses (1) angeordnet ist.

8. Hydroventil nach Anspruch 6, dadurch gekennzeichnet, daß der Pumpenanschluß (P) an der Stirnfläche (2), der Rücklaufanschluß (O) am Umfang des Ventilgehäuses (1) angeordnet ist.

9. Hydroventil nach Anspruch 1 und 2, dadurch gekennzeichnet, daß der Anker (6, 13) aus einem zylindrischen, im Magnetgehäuse (19) längsbeweglich geführten Magnetkern (13) und einer ihn beidseits zentral durchdringenden, an ihm befestigten Ankerstange (6) besteht, wobei an einem Ende der Ankerstange (6) der Ventilkörper (5), am anderen Ende eine Membran (8) befestigt ist, die an ihrem Rand im Ventilgehäuse (1) gehalten ist, und wobei die Membran (8) als Rückstellfeder und zugleich als Gegenfläche (8) dient.

10. Hydroventil nach Anspruch 9, dadurch gekennzeichnet, daß der bewegliche Magnetkern (13) mit geringem axialem Abstand zu einem zu ihm koaxialen, gehäusefesten Magnetkern (16) angeordnet ist, in dem die Ankerstange (6) längsgeführt ist, wobei über die Radialspalte (14) zwischen dem beweglichen Magnetkern (13) und dem Magnetgehäuse sowie zwischen der Ankerstange (6) und dem feststehenden Magnetkern (16) der Pumpendruck auf die Membran (8) übertragen wird.

11. Hydroventil nach Anspruch 10, dadurch gekennzeichnet, daß im Ventilgehäuse (1) ein Führungsring (15) für den beweglichen Magnetkern (13), ein Haltering (17) für den feststehenden Magnetkern (16) und zwei mit dem Ventilkörper (5) zusammenwirkende Sitzringe (3 und 4) befestigt sind.

12. Hydroventil nach Anspruch 11, dadurch gekennzeichnet, daß jeweils als Gleichteile ausgebildet sind: der feststehende Magnetkern (6) und der bewegliche Magnetkern (13), der Führungsring (15) und der Haltering (17) sowie die beiden Sitzringe (3 und 4).

FIG.1

FIG. 2

FIG. 3

FIG.4

FIG.5